# FASCICULE DE BREVET EUROPEEN

(11) **EP 0 713 744 B1**
(45) Date de publication et mention de la délivrance du brevet: **18.03.1998**
(21) Numéro de dépôt: 95402566.4
(22) Date de dépôt: 15.11.1995
(51) Int. Cl.: B23K 11/31

(54) **Dispositif d'équilibrage des forces agissant sur un bras sollicité par une charge**
Apparat für den Ausgleich der Kräfte die auf einen, bei einer Last gezogenen, Arm wirken
Apparatus for balancing the forces acting on an arm pulled by a load

(30) Priorité: 25.11.1994 FR 9414178
(43) Date de publication de la demande: 29.05.1996
(73) Titulaire: Loriot, Jean-Marc, F-75015 Paris (FR)
(72) Inventeur: Loriot, Jean-Marc, F-75015 Paris (FR)
(74) Mandataire: Bezault, Jean

(56) Documents cités:
- DE-C- 735 274
- FR-A- 2 565 153
- PATENT ABSTRACTS OF JAPAN vol. 006 no. 184 (M-157) ,21 Septembre 1982 & JP-A-57 091885 (KIKUCHI KOGYO KK) 8 Juin 1982,

## Description

L'invention concerne un dispositif d'équilibrage des forces agissant sur un bras sollicité par une charge, le dispositif comprenant un corps sur lequel le bras est articulé en rotation autour d'un axe, notamment d'un axe horizontal.

On connaît déjà, par les Brevets français FR-B-2565153 et FR-B-2627718 des dispositifs d'équilibrage de ce genre qui permettent d'équilibrer des forces, notamment de pesanteur, agissant sur un bras de robot ou analogue.

De tels dispositifs sont utilisés notamment pour équilibrer les forces agissant sur un bras sollicité par une charge telle qu'un outil. Ils permettent d'obtenir un équilibrage rigoureux du bras avec des possibilités d'un grand débattement angulaire du bras.

A titre d'exemple, la charge peut être un outil, tel qu'une pince à souder, utilisé sur les chaînes de montage de véhicules automobiles.

En ce cas, l'opérateur peut déplacer l'outil pratiquement sans effort puisque le dispositif d'équilibrage compense les forces qui agissent sur le bras, et cela quelle que soit la position angulaire de ce dernier autour de son axe d'articulation en rotation, lequel est généralement horizontal.

Dans les dispositifs d'équilibrage connus, le corps du dispositif, sur lequel est articulé le bras, a été jusqu'à présent monté dans une position fixe.

Cette solution connue pose un certain nombre de problèmes, notamment au niveau du réglage du dispositif, lequel doit tenir compte de la valeur de la charge qui sollicite le bras.

Un autre inconvénient de cette solution connue est qu'elle limite les possibilités de mouvement du dispositif horizontalement, tant en translation qu'en rotation, ce qui n'est pas souhaitable dans le cas où la charge est un outil que l'opérateur doit pouvoir déplacer dans les trois directions de l'espace.

L'invention a notamment pour but de surmonter les inconvénients précités.

Elle propose en conséquence un dispositif d'équilibrage du type défini en introduction, dans lequel le corps est suspendu à un point de support par l'intermédiaire d'un support triangulaire réglable relié à deux points de fixation du corps, lesquels sont espacés l'un de l'autre dans le plan horizontal et dans une direction sensiblement perpendiculaire à l'axe de rotation du bras, ce qui permet de régler la distance entre le point de support et les deux points de fixation pour que le centre de gravité du dispositif, bras et charge compris, se trouve sensiblement à l'aplomb du point de support lorsque le bras est dans une position intermédiaire sensiblement horizontale.

L'invention permet ainsi de réaliser un montage suspendu du dispositif par rapport à un point de support et de régler le centre de gravité de l'ensemble à l'aplomb du point de support.

Il a été constaté, de façon surprenante, qu'un tel montage offrait un certain nombre d'avantages d'utilisation du dispositif par rapport à la technique antérieure.

Dans la plupart des cas, le bras du dispositif est articulé autour d'un axe horizontal et peut se débattre angulairement de part et d'autre d'une position centrale avantageusement horizontale.

Dans la plage d'utilisation habituelle de l'appareil, c'est-à-dire d'environ ±30° par rapport à l'horizontale, on constate que, grâce au montage réglable de l'invention, le corps du dispositif reste sensiblement horizontal et offre un excellent confort d'utilisation.

Au-delà de cette plage d'utilisation, le corps du dispositif s'incline légèrement en provoquant un léger déséquilibre accentuant le mouvement, soit vers le haut la charge ayant tendance à monter, soit vers le bas la charge ayant tendance à descendre.

Cette particularité qui laisse une plage d'utilisation largement suffisante est un avantage car elle procure alors une position de rangement de la charge, ce qui est particulièrement avantageux lorsque cette charge est un outil car l'outil dégage alors la zone de travail. Une légère pression appliquée alors à l'outil suffit pour le ramener dans sa zone de travail.

En outre, l'utilisation d'un support triangulaire réglable permet d'adapter la position du corps du dispositif en fonction de la hauteur sous plafond disponible sur le site d'utilisation.

Dans une forme de réalisation de l'invention, le support triangulaire réglable comprend une première barre de longueur réglable reliée au point de support et à l'un des deux points de fixation du corps et une seconde barre de longueur réglable reliée à l'autre point de fixation du corps et à un point d'ancrage intermédiaire de la première barre.

Cette forme de réalisation, particulièrement simple, du support triangulaire, permet un montage et un réglage aisé sur le site d'utilisation.

Dans cette forme de réalisation, la première barre est avantageusement percée de plusieurs trous espacés, situés dans une région centrale entre ses deux extrémités, pour permettre une fixation ajustable avec la seconde barre.

Cette seconde barre est avantageusement percée de plusieurs trous à l'une de ses extrémités pour permettre une fixation ajustable à la première barre.

Pour régler la longueur de la première barre, il est possible aussi de prévoir une extrémité percée de trous espacés et/ou de couper cette barre à la longueur voulue.

Dans une forme de réalisation de l'invention, le point de support est accroché à l'extrémité d'un câble suspendu, ce qui offre des possibilités de mouvement très appréciables, notamment en rotation et pour des mouvements latéraux de faible amplitude.

Dans une autre variante, le point de support est réalisé sous la forme d'un support universel, par exemple du type cardan, offrant lui aussi des possibilités de mouvement comparables, mais d'amplitude plus faible que dans le cas précédent.

Selon une autre caractéristique de l'invention, le point de support est relié, directement ou indirectement, à un mécanisme de déplacement à mouvements croisés dans deux directions horizontales perpendiculaires. On peut ainsi accrocher le dispositif à un mécanisme de déplacement cartésien qui, combiné ou non avec des moyens permettant des rotations et/ou des déplacements de faible amplitude, offre d'excellentes possibilités de déplacements latéraux.

L'invention prévoit également que le bras comporte des moyens pour régler la distance d'accrochage de la charge par rapport à l'axe d'articulation en rotation.

Dans une forme de réalisation, ces moyens de réglage comprennent une série de trous espacés et situés à des distances différentes de l'axe d'articulation en rotation.

De façon avantageuse, le bras est double et constitué de deux barres parallèles reliées entre elles par un axe servant à l'accrochage de la charge.

Il en résulte également un meilleur équilibrage de l'ensemble puisque l'application de la charge peut se faire dans un plan médian du corps du dispositif.

Dans la description qui suit, faite seulement à titre d'exemple, on se réfère au dessin annexé, sur lequel :
- la figure 1 est une vue de côté d'un dispositif d'équilibrage selon l'invention, dont le bras est sollicité par une charge, telle qu'un outil;
- la figure 2 est une vue de côté d'un dispositif selon l'invention relié à un mécanisme de déplacement à mouvements croisés; et
- la figure 3 est une vue d'extrémité du corps du dispositif dans une forme de réalisation où le bras est double.

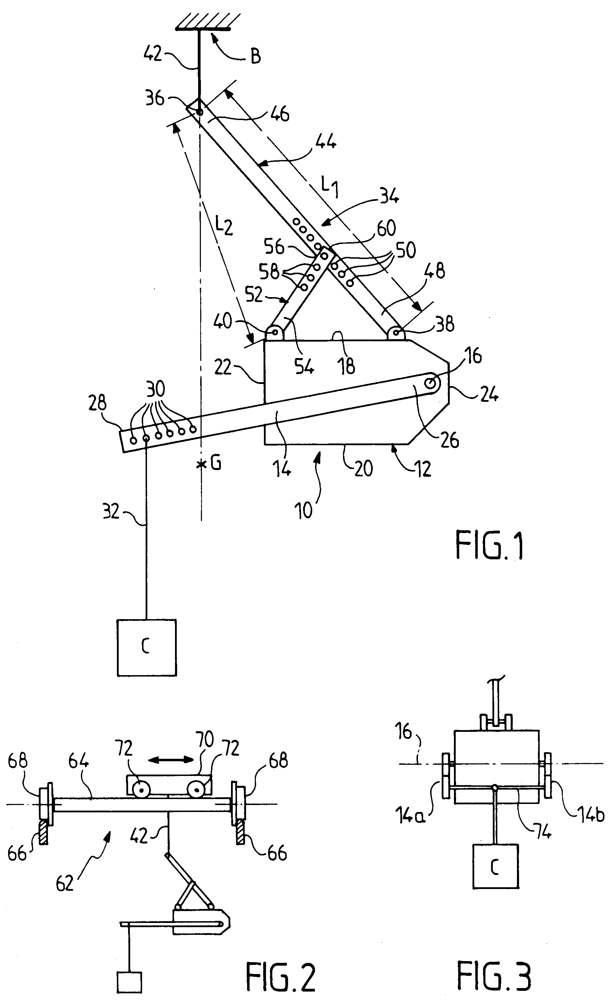

On se réfère à la figure 1 qui représente un dispositif d'équilibrage 10 selon l'invention comprenant un corps 12 sur lequel est articulé un bras 14 autour d'un axe de rotation 16 disposé sensiblement à l'horizontale.

Le corps 12 a une configuration généralement allongée et il comporte principalement une face supérieure 18, une face inférieure 20, une face d'extrémité 22 et une autre face d'extrémité 24 opposée.

L'axe d'articulation 16 est situé proche de cette extrémité 24 et le bras 14 comprend une première extrémité 26 articulée sur l'axe 16 et une seconde extrémité 28 qui, dans la position représentée, va au-delà de la face d'extrémité 22 du corps 12.

Le corps 12 loge intérieurement des moyens d'équilibrage (non représentés) qui peuvent être identiques ou analogues à ceux décrits dans le Brevet français FR-B-2565153 ou le Brevet français FR-B-2627718, auxquels il peut être fait référence pour plus amples informations.

L'extrémité 28 du bras 14 est percée d'une série de trous espacés 30 situés à des distances différentes de l'axe d'articulation 16. On peut ainsi fixer au bras 14 une charge C par exemple un outil, par l'intermédiaire d'une liaison 32.

Lorsque le dispositif 10 est réglé, il permet d'obtenir un équilibrage rigoureux du bras, quelle que soit sa position angulaire, de part et d'autre d'une position intermédiaire dans laquelle ce bras est sensiblement horizontal.

Conformément à l'invention, le dispositif 10 est suspendu à un bâti B par l'intermédiaire d'un support triangulaire 34, lequel est relié, d'une part à un point de support 36 et, d'autre part à deux points de fixation 38 et 40 du corps 12. Les points de fixation 38 et 40 sont espacés l'un de l'autre dans le plan horizontal et dans une direction sensiblement perpendiculaire à l'axe 16.

Dans l'exemple, le point de support 36 est relié au bâti B par un câble 42.

Le support triangulaire 34 comprend une première barre 44 présentant une longueur réglable L1 et possédant une première extrémité 46 reliée au point de support 36 et une seconde extrémité 48 reliée au point de fixation 38. La longueur L1 peut être réglée par exemple par découpe de la barre à la longueur voulue ou encore grâce à une multiplicité de trous (non représentés) prévus à l'une au moins de ses deux extrémités.

La première barre 44 est percée de plusieurs trous espacés 50 situés dans une région centrale.

Le support 34 comprend en outre une seconde barre 52 dont une extrémité 54 est reliée au point de fixation 40 et dont une autre extrémité 56 est percée de plusieurs trous espacés 58 pour permettre une fixation ajustable à la première barre 44 par un axe 60 traversant l'un des trous 50 et l'un des trous 58.

Par ces réglages, on peut modifier la longueur L1 de la barre 44 qui correspond à la distance entre le point de support 36 et le point de fixation 38 et la longueur L2 qui correspond à la distance entre le point du support 36 et le point de fixation 40.

Conformément à l'invention, le support 34 est réglé de telle sorte que le centre de gravité G du dispositif, bras et charge compris, se trouve sensiblement à l'aplomb du point de support 36 lorsque le bras 14 est dans une position sensiblement horizontale.

Il en résulte alors les avantages mentionnés précédemment en ce qui concerne l'utilisation du dispositif. Dans la plage d'utilisations habituelle correspondant à un angle de ±30° par rapport à l'horizontale, le corps 12 reste dans une position sensiblement horizontale et offre un excellent confort d'utilisation.

Au-delà de cette plage d'utilisations, le dispositif peut s'incliner légèrement en provoquant un léger déséquilibre, comme déjà mentionné.

Le fait d'utiliser un câble 42 pour relier le support 44 au bâti B offre des possibilités de mouvement appréciables, notamment en rotation et pour les mouvements latéraux de faible amplitude.

On se réfère maintenant à la figure 2. Dans cette forme de réalisation, le dispositif est identique à celui de la figure 1, si ce n'est que le câble 42, au lieu d'être relié à un bâti fixe, est relié à un mécanisme de déplacement 62 à mouvements croisés dans deux directions horizontales perpendiculaires, c'est-à-dire à un mécanisme cartésien du type XY.

Ce mécanisme comprend un chariot 64 mobile en translation sur deux rails horizontaux 66 grâce à des roues 68. Le chariot 64 supporte un équipage 70 déplaçable en translation dans une direction perpendiculaire à celle des rails 66 grâce à des roues 72.

L'utilisation d'un mécanisme cartésien augmente les possibilités de déplacements latéraux du dispositif et en conséquence de la charge qu'il supporte, ce qui constitue un avantage notable dans le cas où la charge est un outil que l'opérateur doit déplacer dans les trois directions de l'espace.

On se réfère maintenant à la figure 3 dans laquelle le bras 14 du dispositif est formé de deux barres 14a et 14b articulées sur l'axe 16. Les barres 14a et 14b sont parallèles et reliées entre elles par un axe 74 servant à l'accrochage de la charge C.

L'invention n'est pas limitée aux formes de réalisation décrites précédemment à titre d'exemple et s'étend à d'autres variantes.

Ainsi, le support triangulaire est susceptible de nombreuses variantes de réalisation, du moment qu'il permet de modifier les distances qui séparent respectivement le point de support des deux points de fixation du corps du dispositif. Il pourrait par exemple être réalisé sous la forme de deux tiges munies chacune d'un mécanisme de réglage de longueur du type ridoir ou analogue.

L'invention trouve une application particulière au déplacement d'une charge et spécialement d'un outil, par exemple une pince de soudage, utilisé sur une chaîne de montage de véhicules automobiles.

## Revendications

1. Dispositif d'équilibrage des forces agissent sur un bras sollicité par une charge, comprenant un corps (12) sur lequel le bras (14) est articulé en rotation autour d'un axe (16), notamment d'un axe horizontal,
caractérisé en ce que le corps (12) est suspendu à un point de support (36) par l'intermédiaire d'un support triangulaire réglable (34) relié à deux points de fixation (38, 40) du corps (12), lesquels sont espacés l'un de l'autre dans le plan horizontal et dans une direction perpendiculaire à l'axe de rotation (16) du bras, ce qui permet de régler la distance entre le point de support (36) et chacun des points de fixation (38, 40) pour que le centre de gravité (G) du dispositif, bras et charge compris, se trouve sensiblement à l'aplomb du point de support (36) lorsque le bras (14) est dans une position intermédiaire sensiblement horizontale.

2. Dispositif selon la revendication 1, caractérisé en ce que le support triangulaire réglable (34) comprend une première barre (44) de longueur réglable reliée au point de support (36) et à l'un (38) des points de fixation du corps et une seconde barre (52) de longueur réglable reliée à l'autre point de fixation (40) du corps et à un point d'ancrage intermédiaire (60) de la première barre (44).

3. Dispositif selon la revendication 2, caractérisé en ce que la première barre (44) est percée de plusieurs trous calibrés espacés (50) situés dans une région centrale pour permettre une fixation ajustable avec la seconde barre (52).

4. Dispositif selon l'une des revendications 2 et 3, caractérisé en ce que la seconde barre (52) est percée de plusieurs trous (58) à l'une de ses extrémités (56) pour permettre une fixation ajustable à la première barre (44).

5. Dispositif selon l'une des revendications 1 à 4, caractérisé en ce que le point de support (36) est accroché à l'extrémité d'un câble suspendu (42).

6. Dispositif selon l'une des revendications 1 à 4, caractérisé en ce que le point de support (36) est réalisé sous la forme d'un support universel.

7. Dispositif selon l'une des revendications 1 à 6, caractérisé en ce que le point de support (36) est relié à un mécanisme de déplacement (62) à mouvements croisés dans deux directions horizontales perpendiculaires.

8. Dispositif selon l'une des revendications 1 à 7, caractérisé en ce que le bras (14) comporte des moyens (30) pour régler la distance d'accrochage de la charge (C) par rapport à l'axe d'articulation (16) du bras.

9. Dispositif selon la revendication 8, caractérisé en ce que les moyens de réglage comprennent une série de trous espacés (30) à des distances différentes de l'axe d'articulation (16) du bras.

10. Dispositif selon l'une des revendications 1 à 9, caractérisé en ce que le bras (14) est double et est constitué de deux barres parallèles (14a, 14b) reliées entre elles par un axe (74) servant à l'accrochage de la charge (C).

## Claims

1. Apparatus for balancing the forces acting on an arm pulled by a load, comprising a body (12) on which the arm (14) is articulated so as to rotate about a shaft (16), notably a horizontal shaft,
characterized in that the body (12) is suspended from a support point (36) via an adjustable triangular bracket (34) connected to two fixing points (38, 40) on the body (12) which are spaced apart from one another in the horizontal plane and in a direction perpendicular to the rotational axis (16) of the arm, thereby enabling the distance between the support point (36) and each of the fixing points (38, 40) to be adjusted in order for the centre of gravity (G) of the apparatus, including the arm and the load, to be substantially plumb with the support point (36) when the arm (14) is in a substantially horizontal intermediate position.

2. Apparatus according to claim 1, characterised in that the adjustable triangular support (34) comprises a first bar (44) of adjustable length connected to the support point (36) and to one (38) of the fixing points on the body, and a second bar (52) of adjustable length connected to the other fixing point (40) on the body and to an intermediate anchoring point (60) on the first bar (44).

3. Apparatus according to claim 2, characterized in that the first bar (44) incorporates a plurality of spaced calibrated holes (50) situated in a central region in order to allow it to be fixed in an adjustable manner to the second bar (52).

4. Apparatus according to either of claims 2 and 3, characterized in that the second bar (52) incorporates a plurality of holes (58) at one of its ends (56) in order to allow it to be fixed in an adjustable manner to the first bar (44).

5. Apparatus according to any of claims 1 to 4, characterised in that the support point (36) is hitched to the end of a hanging cable (42).

6. Apparatus according to any of claims 1 to 4, characterised in that the support point (36) is constructed in the form of a universal bracket.

7. Apparatus according to any of claims 1 to 6, characterised in that the support point (36) is connected to a travelling mechanism (62) with crosswise movements in two perpendicular horizontal directions.

8. Apparatus according to any of claims 1 to 7, characterised in that the arm (14) has means (30) for adjusting the distance at which the load (C) is hitched with respect to the hinge pin (16) of the arm.

9. Apparatus according to claim 8, characterised in that the adjustment means comprise a row of holes (30) spaced at various distances from the hinge pin (16) of the arm.

10. Apparatus according to any of claims 1 to 9, characterised in that the arm (14) is a double arm and is made up of two parallel bars (14a, 14b) joined together by a shaft (74) used for hitching up the load (C).

## Patentansprüche

1. Vorrichtung zum Ausgleich der Kräfte, die auf einem Arm einwirken, der durch eine Last belastet ist, umfassend einen Körper (12), auf dem der Arm (14) um eine Achse (16), insbesondere eine horizontale Achse, drehbar gelagert ist, dadurch gekennzeichnet, daß der Körper (12) an einem Unterstützungspunkt (36) mittels eines verstellbaren Dreieckträgers (34) aufgehängt ist, der mit zwei Befestigungspunkten (38, 40) des Körpers (12) verbunden ist, welche in der Horizontalebene und in einer zur Drehachse (16) des Arms im wesentlichen senkrechten Richtung im Abstand voneinander angeordnet sind, was es ermöglicht, den Abstand zwischen dem Unterstützungspunkt (36) und jedem der Befestigungspunkte (38, 40) zu verstellen, damit sich der Schwerpunkt (G) der Vorrichtung, einschließlich Arm und Last, im wesentlichen im Lot des Unterstützungspunktes (36) befindet, wenn der Arm (14) in einer im wesentlichen horizontalen Mittelstellung ist.

2. Vorrichtung nach Anspruch 1, dadurch gekennzeichnet, daß der verstellbare Dreieckträger (34) ein erstes Glied (44) mit einstellbarer Länge umfaßt, das mit dem Unterstützungspunkt (36) und mit dem einen (38) der Befestigungspunkte des Körpers verbunden ist, sowie ein zweites Glied (52) mit einstellbarer Länge, das mit dem anderen Befestigungspunkt (40) des Körpers und mit einem Zwischenverankerungspunkt (60) des ersten Gliedes (44) verbunden ist.

3. Vorrichtung nach Anspruch 2, dadurch gekennzeichnet, daß das erste Glied (44) von mehreren, in einem mittleren Bereich befindlichen, im Abstand angeordneten kalibrierten Löchern (50) durchsetzt wird, um eine verstellbare Befestigung am zweiten Glied (52) zu ermöglichen.

4. Vorrichtung nach einem der Ansprüche 2 und 3, dadurch gekennzeichnet, daß das zweite Glied (52) an dem einen seiner Enden (56) von mehreren Löchern (58) durchsetzt wird, um eine verstellbarer Befestigung am ersten Glied (44) zu ermöglichen.

5. Vorrichtung nach einem der Ansprüche 1 bis 4, dadurch gekennzeichnet, daß der Unterstützungspunkt (36) am Ende eines Hängeseils (42) aufgehängt ist.

6. Vorrichtung nach einem der Ansprüche 1 bis 4, dadurch gekennzeichnet, daß der Unterstützungspunkt (36) in Form einer Universalhalterung verwirklicht ist.

7. Vorrichtung nach einem der Ansprüche 1 bis 6, dadurch gekennzeichnet, daß der Unterstützungspunkt (36) mit einem Verschiebemechanismus (62) für Kreuzbewegungen in zwei zueinander senkrechten horizontalen Richtungen verbunden ist.

8. Vorrichtung nach einem der Ansprüche 1 bis 7, dadurch gekennzeichnet, daß der Arm (14) Einrichtungen (30) aufweist, um den Abstand der Aufhängung der Last (C) in Bezug zur Drehachse (16) des Arms zu verstellen.

9. Vorrichtung nach Anspruch 8, dadurch gekennzeichnet, daß die Verstelleinrichtungen eine Reihe von im Abstand angeordneten Löchern (30) in unterschiedlichen Abständen von der Drehachse (16) des Arms umfassen.

10. Vorrichtung nach einem der Ansprüche 1 bis 9, dadurch gekennzeichnet, daß der Arm (14) ein Doppelarm ist und von zwei parallelen Gliedern (14a, 14b) gebildet wird, die untereinander durch eine zur Aufhängung der Last (C) dienende Achse (74) verbunden sind.
